# EUROPÄISCHE PATENTANMELDUNG

(11) **EP 4 501 999 A1**
(43) Veröffentlichungstag der Anmeldung: **05.02.2025**
(21) Anmeldenummer: 23188934.6
(22) Anmeldetag: 01.08.2023
(51) Int. Cl.: C08G 18/24, A45C 5/02, A45C 5/03, A45C 13/02, C08G 18/48, C08G 18/76

(54) **VERFAHREN ZUR HERSTELLUNG EINES SCHALENKOFFERS MIT EINER SCHAUMEINLAGE AUS WEICHSCHAUM**

(71) Anmelder: W.AG GmbH, 36419 Geisa (DE); Technische Universität Ilmenau, 98693 Ilmenau (DE)
(72) Erfinder: ULLRICH, Björn, 36115 Ehrenberg (DE); HARTMANN, Robert, 37339 Leinefelde-Worbis (DE); PUCH, Florian, 99423 Weimar (DE)
(74) Vertreter: Walther Bayer Faber Patentanwälte PartGmbB

(57) **Zusammenfassung**

Die Erfindung betrifft ein Verfahren zur Herstellung eines Schalenkoffers (100) mit einem ersten Schalenkörper (10) und einem gelenkig mit diesem verbundenen zweiten Schalenkörper (11), wobei in wenigstens einem der Schalenkörper (10, 11) zumindest eine Schaumeinlage (12, 13) eingebracht wird, wobei wenigstens eine der Schaumeinlagen (13) aus einem Polyurethanwerkstoff gebildet wird, der hergestellt wird aus einem Reaktionsgemisch wenigstens umfassend Polyol (P) und Isocyanat (I). Erfindungsgemäß wird das Polyol (P) zur Bildung des Reaktionsgemisches mit einer Hydroxylzahl von 25 mg KOH/g bis 60 mg KOH/g und/oder von 30 mg KOH/g bis 50 mg KOH/g und/oder von 35 mg KOH/g bis 46 mg KOH/g und/oder von 41 mg KOH/g bereitgestellt, wobei das Reaktionsgemisch abschließend zu einem Weichschaum aufschäumt. Die Erfindung richtet sich ferner auf einen Schalenkoffer (100), hergestellt mit einem solchen Verfahren.

## Beschreibung

Die Erfindung betrifft ein Verfahren zur Herstellung eines Schalenkoffers mit einem ersten Schalenkörper und einem gelenkig mit diesem verbundenen zweiten Schalenkörper, wobei in wenigstens einem der Schalenkörper zumindest eine Schaumeinlage eingebracht wird, wobei wenigstens eine der Schaumeinlagen aus einem Polyurethanwerkstoff gebildet wird, der hergestellt wird aus einem Reaktionsgemisch wenigstens umfassend Polyol und Isocyanat.

### STAND DER TECHNIK

Beispielsweise zeigt die EP 3 135 150 B1 einen gattungsbildenden Schalenkoffer mit einem ersten und einem zweiten Schalenkörper, die über ein Gelenk beweglich miteinander verbunden sind und mittels eines Verschlusses gegeneinander verschlossen werden können. In der Regel sind Schalenkoffer, die zu Aufbewahrungs- und Transportzwecken diesen, mit Schaumstoff ausgekleidet, der Vertiefungen und Aufnahmeöffnungen aufweist, in die die mit dem Schalenkoffer aufzubewahrende und zu transportierende meist empfindlichen Gegenstände eingesetzt werden können. Derartige Schalenkoffer weisen entweder zwei zueinander etwa gleich ausgebildete Schalenkörper auf, die jeweils mit entsprechenden Schaumeinlagen gefüllt sein können, oder es ist wenigstens ein unterer Schalenkörper mit einer Schaumeinlage ausgekleidet, in die die aufzunehmenden Gegenstände eingesteckt werden können, und in einem oberen Schalenkörper befindet sich eine Schaumeinlage, die eine Andrückstruktur aufweist, um bei verschlossenem Schalenkoffer die in der unterseitigen Schaumeinlage eingebrachten Gegenstände in den Vertiefungen zu sichern. Schalenkoffer der hier interessierenden Art können insofern aber auch nur eine Schaumeinlage in einem der beiden Schalenkörper aufweisen.

Aus der DE 35 11 931 A1 ist ein Schalenkoffer mit einem ersten und einem beweglich zu diesem angeordneten zweiten Schalenkörper bekannt, und die Schalenkörper sind mit einer Schaumeinlage ausgekleidet, die hergestellt ist aus einem Polyurethanwerkstoff, der einen Hartschaum bildet und die mehreren Bestandteile der jeweiligen Schalenkörper zusammenhält. Polyurethanwerkstoffe werden dabei in an sich bekannter Weise aus einem Reaktionsgemisch wenigstens umfassend Polyol und Isocyanat hergestellt.

Bei modernen Schalenkoffern werden die Schalenkörper in der Regel einteilig aus einem Kunststoffwerkstoff hergestellt, beispielsweise aus Polypropylen. Werden die Schalenkörper noch mit Folien, Matten, Aufklebern oder sonstigen Trägerkörpern für Grafiken behaftet, und wird die Schaumeinlage aus Polyurethan in den Schalenkörper eingeschäumt, sodass dieser eine Klebeverbindung zum Schalenkörper eingeht, ergeben sich erhebliche Nachteile beim Recyceln des Schalenkoffers, da die unterschiedlichen Werkstoffe nicht mehr voneinander getrennt werden können. Es hat sich aber gezeigt, dass unter bestimmten Voraussetzungen Polyurethanwerkstoffe Verwendung finden können, die eine spätere Trennung der Bestandteile des Schalenkoffers erleichtern, wobei ferner Polyurethanwerkstoffe eingesetzt werden können, die besonders geringfügig umweltbelastend sind.

### OFFENBARUNG DER ERFINDUNG

Aufgabe der Erfindung ist die Verbesserung eines Verfahrens zur Herstellung eines Schalenkoffers mit den Merkmalen des Oberbegriffs des Anspruches 1 sowie die Bereitstellung eines solchen Schalenkoffers gemäß Anspruch 14, wobei das Verfahren so ausgeführt werden soll, dass eine einfache Trennung der Bestandteile des Schalenkoffers möglich ist und ein Recycling der Werkstoffe stattfinden kann. Der Schalenkoffer selbst soll dabei möglichst geringfügig umweltbelastend sein.

Diese Aufgabe wird ausgehend von einem Verfahren zur Herstellung eines Schalenkoffers gemäß Anspruch 1 und ausgehend von einem solchen Schalenkoffer gemäß Anspruch 14 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass das Polyol zur Bildung des Reaktionsgemisches mit einer Hydroxylzahl von 25 mg KOH/g bis 60 mg KOH/g und/oder von 30 mg KOH/g bis 50 mg KOH/g und/oder von 35 mg KOH/g bis 46 mg KOH/g und/oder von 41 mg KOH/g bereitgestellt wird, wobei das Reaktionsgemisch abschließend zu einem Weichschaum aufschäumt.

Der hier verwendete Begriff des Weichschaumes betrifft einen mit weicheren Formeigenschaften ausgeführten elastischen Formschaumstoff. Insbesondere weist dieser weichere elastische Formschaumstoff als wesentliche Parameter ebenfalls eine spezielle Dichte und/oder eine spezielle Stauchhärte auf. Die Dichte kann beispielsweise einen Wert von 0,03 g/cm3 bis 0,07 g/cm3, bevorzugt von 0,04 g/cm3 bis 0,06 g/cm3, weiter bevorzugt von 0,045 g/cm3 bis 0,055 g/cm3 und besonders bevorzugt von 0,05 g/cm3 auf. Die Stauchhärte weist bei 10% Stauchung einen Druckwert von zum Beispiel 3,9 kPa, bei 25% von zum Beispiel 6 kPa und bei 50% von zum Beispiel 11 kPa auf, wobei die angegebenen Werte um beispielsweise 15% oder 10% oder 5% nach unten und nach oben abweichen können. Die Zellform des härteren elastischen Formschaumstoffes ist insbesondere offenporig.

Der nachfolgend ebenfalls verwendete Begriff des Hartschaumes betrifft einen mit härteren Formeigenschaften ausgeführten elastischen Formschaumstoff. Insbesondere weist dieser härtere elastische Formschaumstoff als wesentliche Parameter eine spezielle Dichte und/oder eine spezielle Stauchhärte auf. Die Dichte kann beispielsweise einen Wert von 0,04 g/cm3 bis 0,08 g/cm3, bevorzugt von 0,05 g/cm3 bis 0,07 g/cm3, weiter bevorzugt von 0,055 g/cm3 bis 0,065 g/cm3 und besonders bevorzugt von 0,06 g/cm3 auf. Die Stauchhärte weist bei 10% Stauchung einen Druckwert von zum Beispiel 7,5 kPa, bei 25% von zum Beispiel 13 kPa und bei 50% von zum Beispiel 35kPa auf, wobei die angegebenen Werte um beispielsweise 15% oder 10% oder 5 % nach unten und nach oben abweichen können. Die Zellform des härteren elastischen Formschaumstoffes ist insbesondere offenporig.

Generell sind der Hartschaum und der Weichschaum in der hier interessierenden Verwendung reversibel verformbar. Wenn sich der Formschaumstoff durch Druck verformt, geht er wieder in seine Ausgangsform zurück, sobald der Druck entfällt. Industriell gehandelter Hartschaum hingegen ist irreversibel, da dieser nicht beliebig verformt werden kann, sondern dieser bleibt in seiner Ausgangsform. Nach dieser Definition sind beide hier interessierenden Schäume eigentlich Weichschäume, diese sollen aber durch die Begriffe Hartschaum und Weichschaum anhand der obenstehend und nachfolgend definierten Stoffeigenschafften und Herstellungsverfahren als Hartschaum und Weichschaum bezeichnet und voneinander unterschieden werden.

Polyol wird in der Regel als eine organische Verbindung bereitgestellt, die aus mehreren Hydroxylgruppen (OH-Gruppen) aufgebaut ist. Die Hydroxylzahl gibt dabei die Anzahl der Hydroxylgruppen an. Ab vier Hydroxylgruppen wird im Allgemeinen der Begriff des Polyols verwendet, wobei die Herstellung von Polyolen entweder auf Basis von Mineralölen oder auf Pflanzenölbasis erfolgen kann. Je niedriger die Hydroxylzahl, also die Anzahl der OH-Gruppen für das Polyol ist, desto weniger kann der Polyurethanwerkstoff vernetzen, da eine niedrigere Hydroxylzahl eine entsprechend niedrigere Bindungsdichte bewirkt, was zu einer niedrigeren Härte der Schaumeinlage führt. Als besonders vorteilhaft hat sich herausgestellt, dass die Hydroxylzahl einen Wert von 25 mg KOH/g bis 60 mg KOH/g, bevorzugt von 30 mg KOH/g bis 50 mg KOH/g, besonders bevorzugt von 35 mg KOH/g bis 46 mg KOH/g und am meisten bevorzugt von 41 mg KOH/g beträgt, da damit ein Polyurethanwerkstoff geschaffen werden kann, der einen niedrigeren Härtegrad aufweist, über den die Schaumeinlage auf einfache Weise vom Schalenkörper gelöst werden kann, aber im Schalenkörper auch bei weicheren Eigenschaften noch selbsthaltend im Schalenkörper eingesetzt werden kann, beispielsweise und insbesondere über einen geometrischen Formschluss.

Vorzugsweise wird das Polyol wenigstens teilweise aus nachwachsenden Rohstoffen bereitgestellt oder mit diesen versetzt, insbesondere umfassend natürliche Öle, Stärke, Zucker, Biopolymere und/oder beispielsweise auch Lignine. Polyole der hier interessierenden Gattung können Polyether, Polyester oder im Allgemeinen Biopolyole basierend auf nachwachsenden Rohstoffen umfassen bzw. aus diesen gebildet werden. Werden derartige Polyole verwendet, können daraus Bio-Polyurethanwerkstoffe hergestellt werden, die im Sinne der vorliegenden Erfindung für den Schalenkoffer als Schaumeinlage zur Anwendung kommen sollen. Insofern können Polyole auch aus natürlichem Rapsöl, Palmöl oder Tallöl gebildet werden, auch als Tallol oder flüssiges Kolophonium bekannt. Derartige Stoffe fallen insbesondere in großen Mengen als Nebenprodukt bei der Holzzellstoff- und Papierproduktion an. Ferner ist es möglich, Polyole aus Rizinus-, Lein- und Sojaöl abzuleiten, womit ebenfalls biologisch generierte Basisstoffe für das Polyol und insofern auch für den Polyurethanwerkstoff geschaffen werden können. Derartige Polyole zur Bildung von Polyurethanwerkstoffen sind für den erfindungsgemäßen Schalenkoffer von besonderem Vorteil, da die Schaumeinlagen in der Regel zur geschützten Aufbewahrung von empfindlichen technischen Einrichtungen dienen, und die Schaumeinlagen müssen insofern keine weiteren Spezifikationen erfüllen, wie diese beispielsweise im Lebensmittelbereich erforderlich sind.

Das hier interessierende Polyol insbesondere zur Bildung des Weichschaums für die Schaumeinlage kann mit einem Molekulargewicht von 2400 bis 3000 g/mol und/oder 2600 bis 2800 g/mol und/oder 2650 bis 2750 g/mol und/oder 2700 g/mol bereitgestellt werden. Das Optimum für den zu erzeugenden Weichschaum sind 2700 g/mol als Molekulargewicht für das. Mit Bezug auf die Koordinationszahl kann zur Bildung des Weichschaums der Wert 100 vorgesehen werden, was den Wert der Polyolmenge auf das eingesetzte Isocyanat beschreibt.

Mit besonderen Vorteil können 100 g des Polyurethanwerkstoffs aus einer anteiligen Menge von 40 g bis 70 g und/oder aus 50 g bis 65 g und/oder aus 53 g bis 60 g und/oder aus 57,05 g Isocyanat gebildet werden. Dieser Wert ergibt sich dabei aus der Hydroxylzahl von insbesondere 41 mg KOH/g.

Mit weiterem Vorteil kann zur Bildung des Polyurethanwerkstoffs vorgesehen sein, dass ein erster Katalysator insbesondere in Form eines Dibutylzinndilaurats zugegeben wird, vorzugsweise mit einer Menge von 0,225 g auf 100 g Polyol und/oder dass ein zweiter Katalysator insbesondere in Form eines Triethylamin zugegeben wird, vorzugsweise mit einer Menge von 0,15 g auf 100 g Polyol. Die zugegebenen Mengen der Katalysatoren können beispielsweise um weniger als 20%, vorzugsweise um weniger als 10% und besonders bevorzugt um 5% bis 2% nach oben oder unten abweichen.

Das Verfahren zur Herstellung der Schaumeinlage aus Weichschaum umfasst dabei bezüglich des Verfahrensablaufs wenigstens die folgenden Schritte: Erwärmen der Reaktionskomponenten wenigstens umfassend Polyol und Isocyanat auf 45°C bis 55°C und/oder auf 50°C; Mischen der zusammengeführten Komponenten, bis 40 % einer Reaktionszeit erreicht sind, ab der ein weiteres Aufschäumen der zusammengeführten Komponenten unterbleibt; Formfüllung in einem Werkzeug, bis 60% der Reaktionszeit erreicht sind; restliches Aufschäumen der zusammengeführten Komponenten, bis 100 % der Reaktionszeit erreicht sind und Entformen der formfesten Schaumeinlage. Anstatt der Wassermenge kann auch ein physikalisches Treibmittel zugegeben werden.

Das Vermischen der Komponenten wenigstens umfassend Polyol und Isocyanat und/oder einem oder mehreren Katalysatoren erfolgt in einem Mischkopf, aus dem das Reaktionsgemisch in die Kavität eingegeben wird, in der dieses anschließend aufschäumt. Die Kavität kann auch zumindest teilweise durch die Schalenkörper des Schalenkoffers gebildet werden.

Die Formfüllung erfolgt vorzugsweise so lange, bis 90% der Reaktionszeit erreicht sind, was bis zum sogenannten Gelpunkt des Reaktionsgemisches erfolgen kann. Anschließend erfolgt ein statisches Auslaufen der Reaktion bis zu den 100%, wenn ein weiteres Aufschäumen der zusammengeführten Komponenten nachfolgend unterbleibt.

In den beiden Schalenkörpern des Schalenkoffers können voneinander unterschiedliche Schaumeinlagen vorgesehen sein. Beispielsweise kann in einem Schalenkörper eine Schaumeinlage aus einem Weichschaum und in einem weiteren Schalenkörper kann eine Schaumeinlage aus einem Hartschaum vorgesehen sein. So ist es denkbar, dass in wenigstens einem der Schalenkörper zumindest eine weitere Schaumeinlage angeordnet wird, die aus einem abweichenden Polyurethanwerkstoff für die weitere Schaumeinlage gebildet wird, beispielsweise aus einem Reaktionsgemisch wenigstens umfassend Polyol und Isocyanat, und wobei das Polyol zur Bildung des Reaktionsgemisches mit einer Hydroxylzahl von 90 mg KOH/g bis 130 mg KOH/g und/oder von 100 mg KOH/g bis 120 mg KOH/g und/oder von 106 mg KOH/g bis 114 mg KOH/g und/oder von 109,6 mg KOH/g bereitgestellt wird, wobei das Reaktionsgemisch abschließend zu einem Hartschaum aufschäumt, der härter ist als der Weichschaum.

Das Polyol für die Bildung der weiteren Schaumeinlage aus einem Weichschaum kann mit einem Molekulargewicht der von 600 bis 1400 g/mol und/oder 800 bis 1200 g/mol und/oder 900 bis 1100 g/mol und/oder 1000 g/mol bereitgestellt werden.

Zur Bildung der weiteren Schaumeinlage kann für die Herstellung des Polyurethanwerkstoffs eine Menge an Isocyanat eingesetzt werden, die für 100 g an Polyurethanwerkstoff etwa 65 g bis 85 g und/oder aus 70 g bis 80 g und/oder aus 75 g bis 78 g und/oder aus 77,6 g Isocyanat beträgt.

Die Schalenkörper und die erste und/oder zweite Schaumeinlage können geometrisch so bestimmt werden, dass die Schaumeinlagen in den Schalenkörpern mittels einem geometrischen Formschluss selbsthaltend eingebracht werden, sodass ohne Verwendung von Klebemitteln oder ohne das direkte und haftungserzeugende Anschäumen der Schaumeinlage an die Innenoberfläche der Schalenkörper die Schaumeinlage im Schalenkörper einsitzt. So kann die Schaumeinlage bei einem Recycling des Schalenkoffers auf einfache Weise aus dem Schalenkörper entnommen werden, ohne dass Teile der Schaumeinlage auf der Innenoberfläche des Schalenkörpers haften bleiben und gegebenenfalls nicht mehr entfernt werden können. Eine rückstandsfreie Trennung von Schaumeinlage und Schalenkörper ist sodann sichergestellt.

Mit besonderen Vorteil kann die erste und/oder zweite Schaumeinlage direkt in den ersten und/oder zweiten Schalenkörper aufgeschäumt werden. Dabei kann die Innenoberfläche des Schalenkörpers, gegen die das Reaktionsgemisch zur Bildung der Schaumeinlage aufschäumt, vor dem Aufschäumen mit einem Trennmittel behaftet werden. Auch ist es möglich, dass die Innenoberfläche zur Meidung einer chemischen Verbindung des Werkstoffes des Schalenkörpers mit der Schaumeinlage chemisch behandelt wird, um ein Anhaften der Schaumeinlage im Schalenkörper zu vermeiden.

Schalenkoffer der hier interessierenden Art dienen insbesondere zur Aufbewahrung und zum Transport von technischen Gegenständen, beispielsweise Fotoapparate und eine zugehörige Ausrüstung, technische Messinstrumente, empfindliche Gerätschaften und dergleichen. Hierfür ist es besonders vorteilhaft, dass die erste und/oder zweite Schaumeinlage Vertiefungen und/oder eine Andrückstruktur aufweist. Beispielsweise kann die erste Schaumeinlage aus Hartschaum Vertiefungen aufweisen, und die zweite Schaumeinlage aus einem Weichschaum weist nur eine Andrückstruktur auf. Dabei können die Vertiefungen und/oder die Andrückstruktur in einem Werkzeugoberteil und/oder in einem Werkzeugunterteil des Werkzeugs zur Herstellung der Schaumeinlage als Negativkontur eingebracht sein, sodass sich die Vertiefungen und/oder die Andrückstruktur bereits mit dem Aufschäumen in der ersten und/oder der zweiten Schaumeinlage ergibt. Insbesondere bei größeren Stückzahlen ist es vorteilhaft, die Negativkontur im Werkzeugunterteil oder im Werkzeugoberteil so auszugestalten, dass die Konturen für die Vertiefungen und/oder die Andrückkontur, beispielsweise eine Noppenstruktur, bereits im Schäumprozess in der Schaumeinlage abzubilden. Alternativ können die Vertiefungen und/oder die Andrückstruktur auch über ein Fräsverfahren, ein Schnittverfahren oder dergleichen in die Schaumeinlage eingebracht werden, was insbesondere bei kleineren Stückzahlen vorteilhaft ist. Vorzugsweise sollte jedoch die Schaumeinlage bereits mit der entsprechenden Konturierung im Werkzeug erzeugt werden, um einen unnötigen Verschnitt zu vermeiden.

Die Erfindung richtet sich ferner auf einen Schalenkoffer, der mit dem voranstehend vorgestellten Verfahren hergestellt ist. Der Schalenkoffer weist dabei als wesentliche Strukturbauteile einen ersten und/oder zweiten Schalenkörper auf, die gelenkig miteinander verbunden sind, wobei in wenigstens einem der Schalenkörper zumindest eine Schaumeinlage angeordnet ist, wobei wenigstens eine der Schaumeinlagen aus einem Polyurethanwerkstoff gebildet ist, der einen Weichschaum bildet. Besonders bevorzugt weist der Schalenkoffer eine weitere Schaumeinlage auf, hergestellt aus einem Polyurethanwerkstoff, der einen Hartschaum bildet.

### BEVORZUGTES AUFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht eines Werkzeugs mit einer entsprechenden Medienvorlage zur Herstellung einer Schaumeinlage aus einem Polyurethanwerkstoff,
- Figur 2: eine schematische Ansicht eines Rundtakttisches in Verbindung mit einem entsprechenden Werkzeug gemäß Figur 1 zur Herstellung der Schaumeinlagen und
- Figur 3: eine quergeschnittene Ansicht eines schematisiert dargestellten Schalenkoffers mit einer Schaumeinlage aus Hartschaum in einem unteren Schalenkörper und mit einer Schaumeinlage aus Weichschaum in einem oberen Schalenkörper.

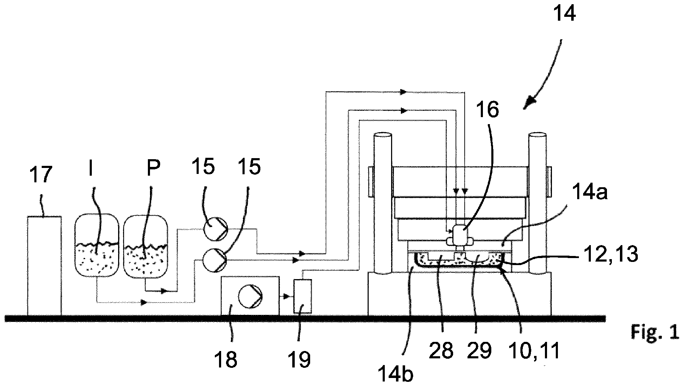

Figur 1 zeigt als wesentlichen Bestandteil einer Anlage zur Herstellung eines erfindungsgemäßen Schalenkoffers das Werkzeug 14 mit einem Werkzeugoberteil 14a und einem Werkzeugunterteil 14b, wobei das Werkzeugoberteil 14a vertikal beweglich ist und gegen das Werkzeugunterteil 14b eine nach oben gerichtete Öffnungsbewegung oder eine nach unten gerichtete Schließbewegung ausführen kann. Wird das Werkzeugoberteil 14a gegen das Werkzeugunterteil 14b geschlossen, entsteht eine Kavität, in die über den Mischkopf 16 ein Reaktionsgemisch eingegeben werden kann. Das Reaktionsgemisch kann sodann in der Kavität aufschäumen und eine Schaumeinlage 12, 13 bilden, indem die Kavität die geometrische Form der zu erzeugenden Schaumeinlage 12, 13 aufweist.

Zur Herstellung des Reaktionsgemisches werden die Hauptbestandteile Polyol P und Isocyanat I bereitgestellt, die schematisch in entsprechenden Behältnissen dargestellt sind. Über jeweilige den Behältnissen zugeordnete Dosiereinrichtungen 15 können das Polyol P und das Isocyanat I an den Mischkopf 16 herangeführt und im Mischkopf 16 miteinander vermischt werden, sodass anschließend die Eingabe des so gebildeten Reaktionsgemisches in die Kavität zwischen dem Werkzeugoberteil 14a und dem Werkzeugunterteil 14b erfolgen kann. Der Bestandteil Polyol P beschreibt im vorliegenden Sprachgebrauch eine Polyolmischung, die Polyol, Additive und Waser umfassen kann. Auch kann das Polyol P sowohl für den Weichschaum als auch für den Hartschaum bereits eine Menge an Präpolymer aufweisen oder durch eine Teilmenge oder Menge an Präpolymer bereits gebildet sein, auch wenn dieses für die Herstellung eines Hartschaumes der vorgegebenen Wassermenge noch einmal in einer separierten Menge zugegeben werden kann.

Zur Steuerung und zum Verfahren des Werkzeugoberteils 14a gegenüber dem Werkzeugunterteil 14b dient eine Anlagensteuerung 17 in Verbindung mit einer Hydraulikeinheit 18, wobei zusätzlich eine Mischkopfsteuerung 19 schematisch dargestellt ist.

Die Darstellung zeigt beispielhaft ein Werkzeugoberteil 14a mit entsprechenden geometrischen Ausgestaltungen, um die Vertiefungen 28 und 29 bereits im Schäumprozess in die Schaumeinlage 12, 13 einzubringen. Auf gleiche Weise kann beispielsweise auch eine Andrückstruktur in die Schaumeinlage eingebracht werden.

In der Darstellung ist im Werkzeugunterteil 14b ein Schalenkörper 10, 11 gezeigt, der vor dem Einbringen des Reaktionsgemisches in die Kavität zwischen dem Werkzeugoberteil 14a und dem Werkzeugunterteil 14b in das Werkzeug 14 eingelegt werden kann. Beispielhaft ist wie dargestellt der Schalenkörper 10, 11 im Werkzeugunterteil 14b eingelegt, sodass anschließend das Reaktionsgemisch in der verbleibenden Kavität eingegeben wird, um anschließend in dieser aufzuschäumen. Dadurch wird erreicht, dass das Reaktionsgemisch bereits in dem Schalenkörper 10, 11 aufschäumt, sodass die Schaumeinlage 12, 13 nicht zuerst bereitgestellt und anschließend in den Schalenkörper 10, 11 eingebracht werden muss.

Dabei kann die Innenoberfläche des Schalenkörpers 10, 11 ein Trennmittel aufweisen oder entsprechend behandelt sein, sodass eine chemische Anhaftung des Reaktionsgemisches und schließlich der gebildeten Schaumeinlage 12, 13 an dem Werkstoff des Schalenkörpers 10, 11 vermeidet. So kann bei einem späteren Recycling die Schaumeinlage 12, 13 auf einfache Weise aus dem Schalenkörper 10, 11 entnommen werden.

In nicht näher dargestellter Weise können innenseitig im Schalenkörper 10, 11 hinterschneidende Bereiche erzeugt werden, sodass eine selbsthaltende Anordnung der Schaumeinlage 12, 13 im Schalenkörper 10, 11 erreicht werden kann. Durch einen so gebildeten geometrischen Formschluss kann sichergestellt werden, dass die Schaumeinlage 12, 13 im Schalenkörper 10, 11 einliegt und in dieser verbleibt, ohne dass Klebemittel oder dergleichen Verwendung finden muss.

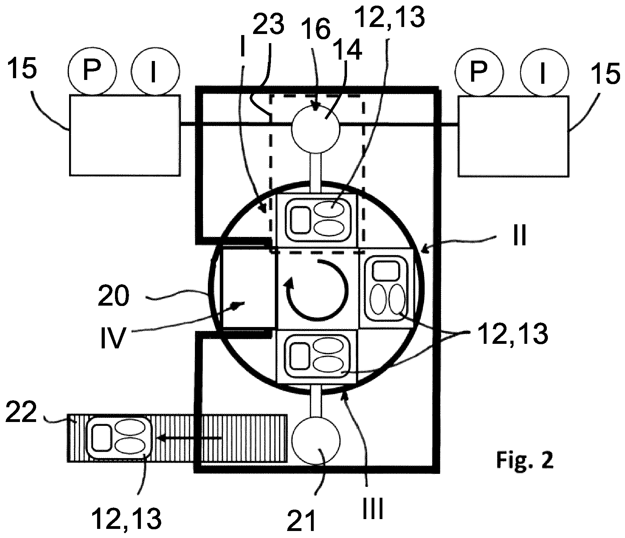

Figur 2 zeigt einen Rundtakttisch 20, der die Schaumeinlagen 12, 13, in nicht näher gezeigter Weise insbesondere direkt gemeinsam mit den Schalenkörpern 10, 11 über verschiedene Stationen I, II, III und IV hinweg bewegen kann.

Die erste Station I ermöglicht die Ausgabe des Reaktionsgemisches in das Werkzeug 14, das bereits mit den Konturen die Schaumeinlage 12, 13 als Negativ bildet. Die Ausgabe des Reaktionsgemisches erfolgt über den Mischkopf 16, wobei diese Station beispielsweise über eine Absauganlage 23 mit einem entsprechenden Filter verfügen kann. Insofern bildet die gezeigte erste Station gemäß einer möglichen Ausführungsform das Werkzeug 14 gemäß Figur 1, sodass auch die Dosiereinrichtungen 15 mit den Medienvorlagen Polyol P und Isocyanat I als Bestandteil des Werkzeugs 14 eingerichtet sein können. Dabei sind die beiden Medienvorlagen doppelt gezeigt, und beispielsweise kann eine erste linksseitig gezeigte Dosiereinrichtung 15 mit der Bereitstellung des Polyols P und des Isocyanats I für die Bildung des Hartschaumes dienen, während eine zweite rechtsseitig dargestellte Dosiereinrichtung 15 ebenfalls mit den Medienvorlagen Polyol P und Isocyanat I die Erzeugung eines entsprechenden Reaktionsgemisches für einen Weichschaum an den Mischkopf 16 bereitstellt. Die hierfür notwendigen Steuerelemente zur Steuerung des Mischkopfes 16 sind dabei nicht näher dargestellt.

Der Rundtakttisch 20 dient zur wenigstens halbautomatisierten Handhabung der erzeugten Bauteile, nämlich der Schalenkörper 10, 11 vom Werkzeug bis an eine weiterverarbeitende Station. Diese können, wie in Zusammenhang mit Figur 1 beschrieben, auch bereits direkt in die Schalenkörper 10, 11 aufgeschäumt werden, was in Figur 2 allerdings nicht näher gezeigt ist, und insofern als mit umfasst verstanden werden kann.

Die zweite Station II betrifft eine Station, in der das Reaktionsgemisch aufschäumen kann, beispielsweise um die Kavität im Werkzeug entsprechend zu füllen, wobei in der Station II auch eine Aushärtedauer eingehalten werden kann. In der zweiten Station II entsteht folglich die formfeste Schaumeinlage 12, 13, die schließlich durch die Bewegung des Rundtakttisches 20 in die dritte Station III insbesondere gemeinsam mit dem Schalenkörper 10, 11 überführt werden kann.

In der dritten Station III ist ein Handhabungssystem 21 eingerichtet, um die im Wesentlichen formfeste Schaumeinlage 12, 13 aus dem Werkzeug zu entnehmen und auf eine Fördereinrichtung 22 zu überführen, auf der die Schaumeinlagen 12, 13 gegebenenfalls auch gemeinsam mit den bereits bereitgestellten Schalenkörpern 10, 11 der weiteren Verwendung zugeführt werden können.

Schließlich folgt die Station IV, in der das Werkzeug 14 gereinigt werden muss, was beispielsweise durch eine Bedienperson von Hand erfolgen kann.

Das Werkzeug 14 ist in den Figuren 1 und 2 lediglich schematisch dargestellt, wobei Figur 1 das Werkzeug 14 mit einem vertikal bewegbaren Werkzeugoberteil 14a zeigt, der gegen ein stationäres Werkzeugunterteil 14b schließen und öffnen kann. Im Rahmen der vorliegenden Erfindung können dabei auch Werkzeuge vorgesehen werden, die über eine Gelenkverbindung zwischen dem Werkzeugoberteil und dem Werkzeugunterteil verfügen, und es können in einem solchen Werkzeug auch mehrere Schaumeinlagen 12, 13 gleichzeitig aufgeschäumt werden, indem über einen oder mehrere Mischköpfe das Reaktionsgemisch gleichzeitig in die mehreren Kavitäten in einem gemeinsamen Werkzeug eingegeben werden kann.

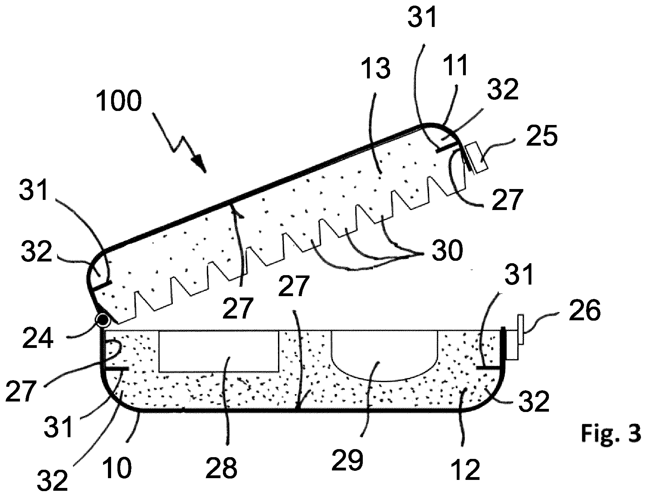

Figur 3 zeigt schließlich schematisch einen Schalenkoffer 100 in einem Querschnitt, und der Schalenkoffer 100 weist einen ersten Schalenkörper 10 auf der Unterseite und einen über ein Gelenk 24 mit diesem verbundenen zweiten Schalenkörper 11 auf einer Oberseite auf, der gegenüber dem Schalenkörper 10 auf der Unterseite leicht geöffnet gezeigt ist. Die schematische Ansicht zeigt sowohl im unteren Schalenkörper 10 als auch im oberen Schalenkörper 11 eine jeweilige Schaumeinlage 12, 13, wobei die Schaumeinlage 12 im unteren Schalenkörper 10 einen Hartschaum aufweist, und die Schaumeinlage 13 im oberen Schalenkörper 11 weist einen Weichschaum auf. In der Schaumeinlage 12 aus Hartschaum im unteren Schalenkörper 10 sind Vertiefungen 28, 29 eingebracht, und in diese Vertiefungen können beispielsweise empfindliche Gegenstände wie Messinstrumente, optische Systeme, empfindliche Elektronik und dergleichen eingelegt werden, und wird der obere Schalenkörper 11 über das Verschlussoberteil 25 und das Verschlussunterteil 26 verschlossen, so gelangt eine Andrückstruktur 30 der weicheren oberen Schaumeinlage 13 gegen die eingesetzten Gegenstände in den Vertiefungen 28, 29, um diese schließlich innerhalb des Schalenkoffers 100 zu fixieren.

Die Innenoberflächen 27 der Schalenkörper 10, 11 sind mit Trennmitteln behaftet, die eine chemische Anhaftung der Schaumeinlagen 12, 13 an den Werkstoff der Schalenkörper 10, 11 unterbinden.

Wird der Schalenkoffer 100 recycelt, so können die Schaumeinlagen 12, 13 auf einfache Weise aus den Schalenkörpern 10, 11 entnommen werden. Werden die Schaumeinlagen 12, 13 in die Schalenkörper 10, 11 aufgeschäumt, indem das Reaktionsgemisch innerhalb des Werkzeuges unmittelbar in die Schalenkörper 10, 11 eingebracht wird, so können Hinterschneidungsgeometrien 31 für einen geometrischen Formschluss der Schaumeinlagen 12, 13 in den Schalenkörpern 10, 11 sorgen. Die Hinterschneidungsgeometrien 31 bilden Hinterschnittbereiche 32, durch die der geometrische Formschluss erzeugt wird, und durch das Aufschäumen des Reaktionsgemisches zur Bildung der Schaumeinlagen 12, 13 können die Hinterschneidungsgeometrien 31 auf einfache Weise umschäumt werden. Insbesondere dadurch erübrigt sich die Verwendung von Klebemitteln zur haltenden Anordnung der Schaumeinlagen 12, 13 in den Schalenkörpern 10, 11.

Das Polyol zur Bildung des Reaktionsgemisches für den Weichschaum wird mit einer Hydroxylzahl von etwa 41 mg KOH/g bereitgestellt wird, sodass das Reaktionsgemisch abschließend zu einem Weichschaum aufschäumt. Dieser Wert der Hydroxylzahl kann dabei auch leicht nach oben oder unten abweichen, etwa jeweils 10%, vorzugsweise etwa 5% oder auch nur etwa 2%. Das Polyol wird zudem insbesondere mit einem Molekulargewicht von 2400 bis 3000 g/mol und/oder 2600 bis 2800 g/mol und/oder 2650 bis 2750 g/mol und/oder 2700 g/mol bereitgestellt. Auch ist es vorteilhaft, wenn zur Bildung der Schaumeinlage 13 aus Weichschaum 100g des Polyurethanwerkstoffs hierfür aus einer anteiligen Menge von 40 g bis 70 g und/oder aus 50 g bis 65 g und/oder aus 53 g bis 60 g und/oder aus 57,05 g Isocyanat gebildet wird.

Das Polyol zur Bildung des Reaktionsgemisches für den Hartschaum wird mit einer Hydroxylzahl von etwa 109,6 mg KOH/g bereitgestellt, sodass das Reaktionsgemisch abschließend zu einem Hartschaum aufschäumt. Dieser Wert der Hydroxylzahl kann dabei auch leicht nach oben oder unten abweichen, etwa jeweils 10%, vorzugsweise etwa 5% oder auch nur etwa 2%. Das Polyol wird zudem insbesondere mit einem Molekulargewicht von 600 bis 1400 g/mol und/oder 800 bis 1200 g/mol und/oder 900 bis 1100 g/mol und/oder 1000 g/mol bereitgestellt. Auch ist es vorteilhaft, wenn 100 g des Polyurethanwerkstoffs aus einer anteiligen Menge von 65 g bis 85 g und/oder aus 70 g bis 80 g und/oder aus 75 g bis 78 g und/oder aus 77,6 g Isocyanat gebildet wird. Ferner wird ein erster Katalysator insbesondere in Form eines Dibutylzinndilaurat zugegeben, vorzugsweise mit einer Menge von 1,5 g auf 100 g Polyol und/oder es wird ein zweiter Katalysator insbesondere in Form eines Triethylamin zugegeben, vorzugsweise mit einer Menge von 1 g auf 100 g Polyol.

Das Polyol wird wenigstens teilweise aus nachwachsenden Rohstoffen bereitgestellt oder mit diesen versetzt, insbesondere umfassend natürliche Öle, Stärke, Zucker, Biopolymere und/oder Lignine, was die Verwendung von Mineralölen vermeidet.

Die Erfindung beschränkt sich in ihren Ausführungen nicht auf das vorstehend angegebenen bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 100: Schalenkoffer
- 10: Schalenkörper
- 11: Schalenkörper
- 12: Schaumeinlage
- 13: Schaumeinlage
- 14: Werkzeug
- 14a: Werkzeugoberteil
- 14b: Werkzeugunterteil
- 15: Dosiereinrichtung
- 16: Mischkopf
- 17: Anlagensteuerung
- 18: Hydraulikeinheit
- 19: Mischkopfsteuerung
- 20: Rundtakttisch
- 21: Handhabungssystem
- 22: Fördereinrichtung
- 23: Absauganlage
- 24: Gelenk
- 25: Verschlussoberteil
- 26: Verschlussunterteil
- 27: Innenoberfläche
- 28: Vertiefung
- 29: Vertiefung
- 30: Andrückstruktur
- 31: Hinterschneidungsgeometrie
- 32: Hinterschnittbereich
- I: Isocyanat
- P: Polyol
- I: Ausgabe des Reaktionsgemisches in das Werkzeug
- II: Aufschäumen
- III: Entnahme der aufgeschäumten Schaumeinlage
- IV: Reinigung des Werkzeugs

## Patentansprüche

1. Verfahren zur Herstellung eines Schalenkoffers (100) mit einem ersten Schalenkörper (10) und einem gelenkig mit diesem verbundenen zweiten Schalenkörper (11), wobei in wenigstens einem der Schalenkörper (10, 11) zumindest eine Schaumeinlage (12, 13) eingebracht wird, wobei wenigstens eine der Schaumeinlagen (13) aus einem Polyurethanwerkstoff gebildet wird, der hergestellt wird aus einem Reaktionsgemisch wenigstens umfassend Polyol (P) und Isocyanat (I),
**dadurch gekennzeichnet,**
**dass** das Polyol (P) zur Bildung des Reaktionsgemisches mit einer Hydroxylzahl von 25 mg KOH/g bis 60 mg KOH/g und/oder von 30 mg KOH/g bis 50 mg KOH/g und/oder von 35 mg KOH/g bis 46 mg KOH/g und/oder von 41 mg KOH/g bereitgestellt wird, wobei das Reaktionsgemisch abschließend zu einem Weichschaum aufschäumt.

2. Verfahren zur Herstellung eines Schalenkoffers (100) nach Anspruch 1,
**dadurch gekennzeichnet,**
**dass** das Polyol (P) wenigstens teilweise aus nachwachsenden Rohstoffen bereitgestellt oder mit diesen versetzt wird, insbesondere umfassend natürliche Öle, Stärke, Zucker, Biopolymere und/oder Lignine.

3. Verfahren zur Herstellung eines Schalenkoffers (100) nach Anspruch 1 oder 2,
**dadurch gekennzeichnet,**
**dass** das Polyol (P) mit einem Molekulargewicht von 2400 bis 3000 g/mol und/oder 2600 bis 2800 g/mol und/oder 2650 bis 2750 g/mol und/oder 2700 g/mol bereitgestellt wird.

4. Verfahren zur Herstellung eines Schalenkoffers (100) nach einem der Ansprüche 1 bis 3,
**dadurch gekennzeichnet,**
**dass** 100 g des Polyurethanwerkstoffs aus einer anteiligen Menge von 40 g bis 70 g und/oder aus 50 g bis 65 g und/oder aus 53 g bis 60 g und/oder aus 57,05 g Isocyanat gebildet wird.

5. Verfahren zur Herstellung eines Schalenkoffers (100) nach einem der vorgenannten Ansprüche,
**dadurch gekennzeichnet,**
**dass** ein erster Katalysator insbesondere in Form eines Dibutylzinndilaurat zugegeben wird, vorzugsweise mit einer Menge von 0,225 g auf 100 g Polyol und/oder dass ein zweiter Katalysator insbesondere in Form eines Triethylamin zugegeben wird, insbesondere mit einer Menge von 0,15 g auf 100 g Polyol.

6. Verfahren zur Herstellung eines Schalenkoffers (100) nach einem der vorgenannten Ansprüche,
**dadurch gekennzeichnet,**
**dass** das Verfahren zur Herstellung der Schaumeinlage (13) aus Weichschaum wenigstens die folgenden Schritte aufweist:
- Erwärmen der Reaktionskomponenten wenigstens umfassend Polyol (P) und Isocyanat (I) auf 45°C bis 55°C und/oder auf 50°C;
- Zusammenführen zumindest der Komponenten Polyol (P), Isocyanat (I), Katalysator 1 und Katalysator 2;
- Mischen der zusammengeführten Komponenten, bis 40 % einer Reaktionszeit erreicht sind, ab der ein weiteres Aufschäumen der zusammengeführten Komponenten unterbleibt;
- Formfüllung in einem Werkzeug (14), bis 60% der Reaktionszeit erreicht sind und
- restliches Aufschäumen der zusammengeführten Komponenten, bis 100 % der Reaktionszeit erreicht sind und
- Entformen der formfesten Schaumeinlage (13).

7. Verfahren zur Herstellung eines Schalenkoffers (100) nach einem der vorgenannten Ansprüche,
**dadurch gekennzeichnet,**
**dass** in wenigstens einem der Schalenkörper (10, 11) zumindest eine weitere Schaumeinlage (12) angeordnet wird, die ebenfalls aus einem Polyurethanwerkstoff gebildet wird, der hergestellt wird aus einem Reaktionsgemisch wenigstens umfassend Polyol (P) und Isocyanat (I), und wobei das Polyol (P) zur Bildung des Reaktionsgemisches mit einer Hydroxylzahl von 90 mg KOH/g bis 130 mg KOH/g und/oder von 100 mg KOH/g bis 120 mg KOH/g und/oder von 106 mg KOH/g bis 114 mg KOH/g und/oder von 109,6 mg KOH/g bereitgestellt wird, wobei das Reaktionsgemisch abschließend zu einem Hartschaum aufschäumt.

8. Verfahren zur Herstellung eines Schalenkoffers (100) nach Anspruch 7,
**dadurch gekennzeichnet,**
**dass** das Polyol (P) für die Bildung der weiteren Schaumeinlage (12) mit einem Molekulargewicht der von 600 bis 1400 g/mol und/oder 800 bis 1200 g/mol und/oder 900 bis 1100 g/mol und/oder 1000 g/mol bereitgestellt wird.

9. Verfahren zur Herstellung eines Schalenkoffers (100) nach Anspruch 7 oder 8,
**dadurch gekennzeichnet,**
**dass** 100g des Polyurethanwerkstoffs für die Bildung der weiteren Schaumeinlage (12) aus einer anteiligen Menge von 65g bis 85g und/oder aus 70 g bis 80 g und/oder aus 75 g bis 78 g und/oder aus 77,6 g Isocyanat gebildet wird.

10. Verfahren zur Herstellung eines Schalenkoffers (100) nach einem der vorgenannten Ansprüche,
**dadurch gekennzeichnet,**
**dass** die Schalenkörper (10, 11) und die erste und/oder die zweite Schaumeinlage (12, 13) geometrisch so bestimmt werden, dass die Schaumeinlagen (12, 13) in den Schalenkörpern (10, 11) formschlüssig selbsthaltend eingebracht werden.

11. Verfahren zur Herstellung eines Schalenkoffers (100) nach einem der Ansprüche 1 bis 9,
**dadurch gekennzeichnet,**
**dass** die erste und/oder zweite Schaumeinlage (12, 13) direkt in den ersten und/oder zweiten Schalenkörper (10, 11) aufgeschäumt wird bzw. werden.

12. Verfahren zur Herstellung eines Schalenkoffers (100) nach Anspruch 11,
**dadurch gekennzeichnet,**
**dass** die Innenoberfläche (27) des Schalenkörpers (10, 11), gegen die die Schaumeinlage (12, 13) aufschäumt, vor dem Aufschäumen mit einem Trennmittel behaftet wird oder die Innenoberfläche (27) zur Meidung einer chemischen Verbindung des Werkstoffes des Schalenkörpers (10, 11) mit der Schaumeinlage (12, 13) behandelt wird.

13. Verfahren zur Herstellung eines Schalenkoffers (100) nach einem der vorgenannten Ansprüche,
**dadurch gekennzeichnet,**
**dass** die erste und/oder zweite Schaumeinlage (12, 13) Vertiefungen und/oder eine Andrückstruktur (30) aufweist, wobei die Vertiefungen und/oder die Andrückstruktur (30) in einem Werkzeugoberteil (14a) und/oder in einem Werkzeugunterteil (14) des Werkzeugs (14) als Negativkontur eingebracht sind, sodass sich die Vertiefungen und/oder die Andrückstruktur (30) bereits mit dem Aufschäumen in der ersten und/oder zweiten Schaumeinlage (12, 13) ergibt.

14. Schalenkoffer (100), hergestellt mit einem Verfahren nach einem der vorgenannten Ansprüche, mit einem ersten Schalenkörper (10) und mit einem gelenkig mit diesem verbundenen zweiten Schalenkörper (11), wobei in wenigstens einem der Schalenkörper (10, 11) zumindest eine Schaumeinlage (12, 13) angeordnet ist, wobei wenigstens eine der Schaumeinlagen (13) aus einem Polyurethanwerkstoff gebildet ist, der einen Weichschaum bildet.

## Geänderte Patentansprüche

### Geänderte Patentansprüche gemäss Regel 137(2) EPÜ.

1. Verfahren zur Herstellung eines Schalenkoffers (100) mit einem ersten Schalenkörper (10) und einem gelenkig mit diesem verbundenen zweiten Schalenkörper (11), wobei in wenigstens einem der Schalenkörper (10, 11) zumindest eine Schaumeinlage (12, 13) eingebracht wird, wobei wenigstens eine der Schaumeinlagen (13) aus einem Polyurethanwerkstoff gebildet wird, der hergestellt wird aus einem Reaktionsgemisch wenigstens umfassend Polyol (P) und Isocyanat (I),
**dadurch gekennzeichnet,**
**dass** das Polyol (P) zur Bildung des Reaktionsgemisches mit einer Hydroxylzahl von 25 mg KOH/g bis 60 mg KOH/g und/oder von 30 mg KOH/g bis 50 mg KOH/g und/oder von 35 mg KOH/g bis 46 mg KOH/g und/oder von 41 mg KOH/g bereitgestellt wird, wobei das Reaktionsgemisch abschließend zu einem Weichschaum aufschäumt, wobei die Dichte der Schaumeinlage (12, 13) einen Wert von 0,03 g/cm³ bis 0,07 g/cm³ aufweist, sodass damit ein Polyurethanwerkstoff mit einer Härte geschaffen wird, über die die Schaumeinlage (12, 13) auf einfache Weise vom Schalenkörper (10, 11) gelöst werden kann, aber im Schalenkörper (10, 11) selbsthaltende Eigenschaften bietet.

2. Verfahren zur Herstellung eines Schalenkoffers (100) nach Anspruch 1,
**dadurch gekennzeichnet,**
**dass** das Polyol (P) wenigstens teilweise aus nachwachsenden Rohstoffen bereitgestellt oder mit diesen versetzt wird, insbesondere umfassend natürliche Öle, Stärke, Zucker, Biopolymere und/oder Lignine.

3. Verfahren zur Herstellung eines Schalenkoffers (100) nach Anspruch 1 oder 2,
**dadurch gekennzeichnet,**
**dass** das Polyol (P) mit einem Molekulargewicht von 2400 bis 3000 g/mol und/oder 2600 bis 2800 g/mol und/oder 2650 bis 2750 g/mol und/oder 2700 g/mol bereitgestellt wird.

4. Verfahren zur Herstellung eines Schalenkoffers (100) nach einem der Ansprüche 1 bis 3,
**dadurch gekennzeichnet,**
**dass** 100 g des Polyurethanwerkstoffs aus einer anteiligen Menge von 40 g bis 70 g und/oder aus 50 g bis 65 g und/oder aus 53 g bis 60 g und/oder aus 57,05 g Isocyanat gebildet wird.

5. Verfahren zur Herstellung eines Schalenkoffers (100) nach einem der vorgenannten Ansprüche,
**dadurch gekennzeichnet,**
**dass** ein erster Katalysator insbesondere in Form eines Dibutylzinndilaurat zugegeben wird, vorzugsweise mit einer Menge von 0,225 g auf 100 g Polyol und/oder dass ein zweiter Katalysator insbesondere in Form eines Triethylamin zugegeben wird, insbesondere mit einer Menge von 0,15 g auf 100 g Polyol.

6. Verfahren zur Herstellung eines Schalenkoffers (100) nach einem der vorgenannten Ansprüche,
**dadurch gekennzeichnet,**
**dass** das Verfahren zur Herstellung der Schaumeinlage (13) aus Weichschaum wenigstens die folgenden Schritte aufweist:
- Erwärmen der Reaktionskomponenten wenigstens umfassend Polyol (P) und Isocyanat (I) auf 45°C bis 55°C und/oder auf 50°C;
- Zusammenführen zumindest der Komponenten Polyol (P), Isocyanat (I), Katalysator 1 und Katalysator 2;
- Mischen der zusammengeführten Komponenten, bis 40 % einer Reaktionszeit erreicht sind, ab der ein weiteres Aufschäumen der zusammengeführten Komponenten unterbleibt;
- Formfüllung in einem Werkzeug (14), bis 60% der Reaktionszeit erreicht sind und
- restliches Aufschäumen der zusammengeführten Komponenten, bis 100 % der Reaktionszeit erreicht sind und
- Entformen der formfesten Schaumeinlage (13).

7. Verfahren zur Herstellung eines Schalenkoffers (100) nach einem der vorgenannten Ansprüche,
**dadurch gekennzeichnet,**
**dass** in wenigstens einem der Schalenkörper (10, 11) zumindest eine weitere Schaumeinlage (12) angeordnet wird, die ebenfalls aus einem Polyurethanwerkstoff gebildet wird, der hergestellt wird aus einem Reaktionsgemisch wenigstens umfassend Polyol (P) und Isocyanat (I), und wobei das Polyol (P) zur Bildung des Reaktionsgemisches mit einer Hydroxylzahl von 90 mg KOH/g bis 130 mg KOH/g und/oder von 100 mg KOH/g bis 120 mg KOH/g und/oder von 106 mg KOH/g bis 114 mg KOH/g und/oder von 109,6 mg KOH/g bereitgestellt wird, wobei das Reaktionsgemisch abschließend zu einem Hartschaum aufschäumt.

8. Verfahren zur Herstellung eines Schalenkoffers (100) nach Anspruch 7,
**dadurch gekennzeichnet,**
**dass** das Polyol (P) für die Bildung der weiteren Schaumeinlage (12) mit einem Molekulargewicht der von 600 bis 1400 g/mol und/oder 800 bis 1200 g/mol und/oder 900 bis 1100 g/mol und/oder 1000 g/mol bereitgestellt wird.

9. Verfahren zur Herstellung eines Schalenkoffers (100) nach Anspruch 7 oder 8,
**dadurch gekennzeichnet,**
**dass** 100g des Polyurethanwerkstoffs für die Bildung der weiteren Schaumeinlage (12) aus einer anteiligen Menge von 65g bis 85g und/oder aus 70 g bis 80 g und/oder aus 75 g bis 78 g und/oder aus 77,6 g Isocyanat gebildet wird.

10. Verfahren zur Herstellung eines Schalenkoffers (100) nach einem der vorgenannten Ansprüche,
**dadurch gekennzeichnet,**
**dass** die Schalenkörper (10, 11) und die erste und/oder die zweite Schaumeinlage (12, 13) geometrisch so bestimmt werden, dass die Schaumeinlagen (12, 13) in den Schalenkörpern (10, 11) formschlüssig selbsthaltend eingebracht werden.

11. Verfahren zur Herstellung eines Schalenkoffers (100) nach einem der Ansprüche 1 bis 9,
**dadurch gekennzeichnet,**
**dass** die erste und/oder zweite Schaumeinlage (12, 13) direkt in den ersten und/oder zweiten Schalenkörper (10, 11) aufgeschäumt wird bzw. werden.

12. Verfahren zur Herstellung eines Schalenkoffers (100) nach Anspruch 11,
**dadurch gekennzeichnet,**
**dass** die Innenoberfläche (27) des Schalenkörpers (10, 11), gegen die die Schaumeinlage (12, 13) aufschäumt, vor dem Aufschäumen mit einem Trennmittel behaftet wird oder die Innenoberfläche (27) zur Meidung einer chemischen Verbindung des Werkstoffes des Schalenkörpers (10, 11) mit der Schaumeinlage (12, 13) behandelt wird.

13. Verfahren zur Herstellung eines Schalenkoffers (100) nach einem der vorgenannten Ansprüche,
**dadurch gekennzeichnet,**
**dass** die erste und/oder zweite Schaumeinlage (12, 13) Vertiefungen und/oder eine Andrückstruktur (30) aufweist, wobei die Vertiefungen und/oder die Andrückstruktur (30) in einem Werkzeugoberteil (14a) und/oder in einem Werkzeugunterteil (14) des Werkzeugs (14) als Negativkontur eingebracht sind, sodass sich die Vertiefungen und/oder die Andrückstruktur (30) bereits mit dem Aufschäumen in der ersten und/oder zweiten Schaumeinlage (12, 13) ergibt.

14. Schalenkoffer (100), hergestellt mit einem Verfahren nach einem der vorgenannten Ansprüche, mit einem ersten Schalenkörper (10) und mit einem gelenkig mit diesem verbundenen zweiten Schalenkörper (11), wobei in wenigstens einem der Schalenkörper (10, 11) zumindest eine Schaumeinlage (12, 13) angeordnet ist, wobei wenigstens eine der Schaumeinlagen (13) aus einem Polyurethanwerkstoff gebildet ist, der einen Weichschaum bildet, wobei die Dichte der Schaumeinlage (12, 13) einen Wert von 0,03 g/cm³ bis 0,07 g/cm³ aufweist, sodass damit ein Polyurethanwerkstoff mit einer Härte geschaffen wird, über die die Schaumeinlage (12, 13) auf einfache Weise vom Schalenkörper (10, 11) gelöst werden kann, aber im Schalenkörper (10, 11) selbsthaltende Eigenschaften bietet.
